# EUROPÄISCHE PATENTSCHRIFT

(11) **EP 0 345 641 B1**
(45) Veröffentlichungstag und Bekanntmachung des Hinweises auf die Patenterteilung: **22.12.1993**
(21) Anmeldenummer: 89109919.4
(22) Anmeldetag: 01.06.1989
(51) Int. Cl.: G01L 1/25

(54) **Vorrichtung zur Analyse der Belastung eines Messobjektes**
Device for analysing the stress of an object
Dispositif d'analyse de l'état de charge d'un objet

(30) Priorität: 08.06.1988 US 204052
(43) Veröffentlichungstag der Anmeldung: 13.12.1989
(73) Patentinhaber: DEERE & COMPANY, Moline, Illinois 61265 (US)
(72) Erfinder: Boyce, Bradley Robert, Beaver Dam Wisconsin 53916 (US)
(74) Vertreter: Feldmann, Bernhard

(56) Entgegenhaltungen:
- WO-A-79/01156
- WO-A-86/01893
- PATENT ABSTRACTS OF JAPAN, Band 9, Nr. 277 (E-355)[2000], 6. November 1985; & JP-A-60 119 180 (MITSUBISHI DENKI K.K.) 26-06-1985
- PATENT ABSTRACTS OF JAPAN, Band 9, Nr. 150 (E-324)[1873], 25. Juni 1985; & JP-A-60 29 092 (MATSUSHITA DENKI SANGYO K.K.) 14-02-1985
- PATENT ABSTRACTS OF JAPAN, Band 11, Nr. 92 (E-491)[2539], 24. März 1987; & JP-A-61 242 475 (MITSUBISHI ELECTRIC CORP.) 28-10-1986

## Beschreibung

Die Erfindung betrifft eine Vorrichtung zur Analyse der Belastung eines Meßobjekts.

Derartige Vorrichtungen (US-PS-4 541 059, US-PS-4 378 701, Prospekt: SPATE 8000 Stress Analyzer) dienen der berührungslosen und zerstörungsfreien Belastungsmessung an verschiedenen Meßobjekten. Diesen Vorrichtungen liegt das Prinzip zugrunde, daß eine auf ein Meßobjekt einwirkende Zug- oder Druckkraft in dem Meßobjekt zu einer Erwärmung führt, die in einem nachvollziehbaren Verhältnis zu der Größe der Zug- oder Druckkraft steht. Diese Erwärmung wird an die Umgebung abgegeben und kann in ihrer Menge mit einem geeigneten Detektor, z. B. mit einem Infrarotdetektor ermittelt werden. Das Meßobjekt kann somit über seine gesamte Oberfläche abgetastet werden, und die Höhe der Belastung an einzelnen Stellen wird im Vergleich mit einem geeichten oder vorermittelten Belastungs/Wärme-Wert errechnet.

Diese Vorrichtungen sind insofern nachteilig, als sie auch Überlastzustände anzeigen, die durch ungleichmäßige thermische Begleiteffekte oder stark Wärme abgebende äußere Wärmequellen, die in den Aufnahmebereich des Detektors gelangen, hervorgerufen werden. Auf derartige Umstände zurückgehende falsche Meßwerte bleiben jedoch in den gesammelten Meßwerten enthalten und geben nicht das tatsächliche Belastungsbild wieder. Wird jedoch von einer Bedienungsperson bemerkt, daß Meßwerte aufgrund einer Störquelle aufgenommen und somit nicht zutreffend sind, kann zwar die Empfindlichkeit des Detektors neu eingestellt werden; die bisher gesammelten Daten sind mit den nach der Neueinstellung erfaßten Daten aber nicht mehr vergleichbar.

Die der Erfindung zugrunde liegende Aufgabe wird darin gesehen, eine Vorrichtung zur Analyse der Belastung eines Meßobjekts zu entwickeln, die zuverlässig eine Belastung in dem Meßobjekt angibt und nicht von Einflüssen fehlgeleitet wird, die nicht auf der eingebrachten Belastung beruhen.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise bewirken kurzzeitig auftretende Störgrößen, daß die Meßwertaufnahme nicht mit falschen Daten fortgesetzt, sondern wiederholt wird.

Vorteilhafterweise wird die Datenaufnahme sofort nach der Feststellung eines Überlastzustandes unterbrochen und erst bei der erneuten Meßwertaufnahme wieder aufgenommen.

Infolge einer Änderung des Maßes, in dem die von dem Detektor kommenden Signale verstärkt werden, kann der Meßwertaufnahmevorgang an den Überlastzustand angepaßt werden.

Damit sich die vor dem Auftreten des Überlastzustandes aufgenommenen Meßwerte auf einem vergleichbaren Niveau mit den nach dem Überlastzustand aufgenommenen Meßwerten befinden, wird ein Korrektur- oder Angleichsfaktor automatisch beim Auftreten eines Überlastzustandes neu eingestellt, wobei gegenbenenfalls weitere Bedingungen zu beachten sind.

Mit der Anordnung eines Rechenkreises zur Erfassung der innerhalb eines Zeitintervalls erfaßten Überlastzustände kann entschieden werden, ob eine Meßwertaufnahmeunterbrechung, eine Korrektur oder eine Befehlseingabe durch eine Bedienungsperson erfolgen soll.

Soll eine Befehlseingabe durch eine Bedienungsperson erfolgen, ist es zweckmäßig, den gesamten Prüfvorgang für eine vorgegebene Zeitspanne zu unterbrechen und die bisher ermittelten Meßwerte an einem Bildschirm oder einem Drucker anzuzeigen.

In der Zeichnung ist ein nachfolgend näher beschriebenes Ausführungsbeispiel der Erfindung dargestellt. Es zeigt:
- Fig. 1: den Aufbau einer erfindungsgemäßen Vorrichtung zur Analyse der Belastung eines Meßobjekts in schematischer Darstellung,
- Fig. 2a: einen ersten Teil eines Programmablaufplans,
- Fig. 2b: einen zweiten Teil des Programmablaufplans und
- Fig. 2c: einen dritten Teil des Programmablaufplans.

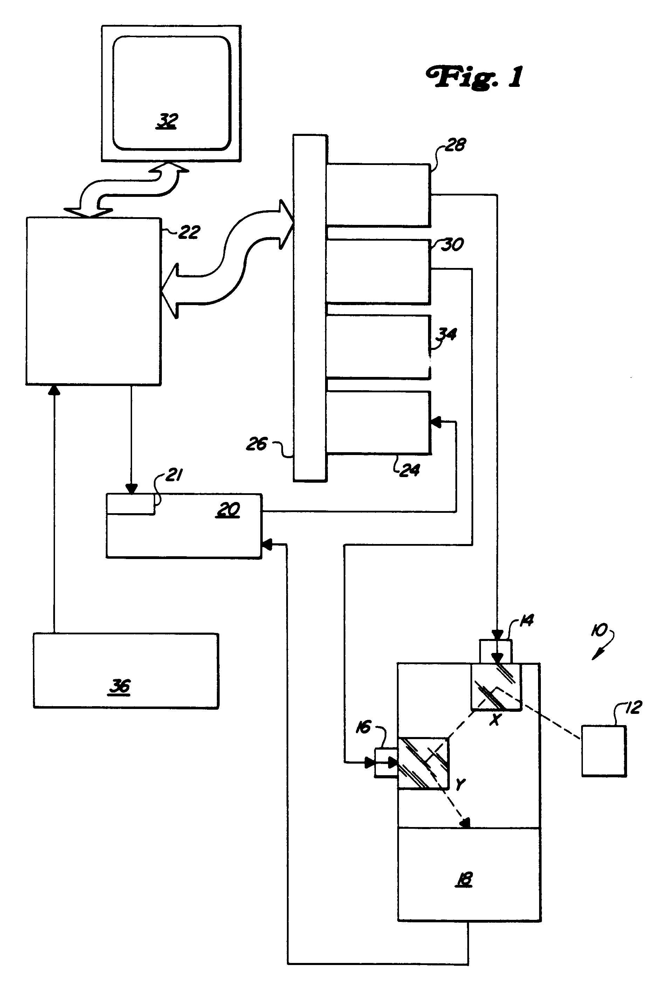

Eine Anlage zur optischen Analyse von Belastungen, wie sie schematisch in Figur 1 gezeigt ist, enthält eine Abtastvorrichtung 10, die so funktioniert, daß sie die von der Belastung herrührende und aus einem Meßobjekt 12 austretende Wärmeabstrahlung optisch erfaßt. Eine derartige Abtastvorrichtung 10, wie sie detailliert in der US-PS-4 378 701 beschrieben ist, weist einen X- und einen Y-Spiegelantriebsmotor 14, 16 mit dazugehörigen X- und Y-Spiegeln und einen Detektor 18 auf, der als Infrarotdetektor ausgebildet ist. Ein Synchrondetektor 20 (Correlator, Vergleicher) erhält ein Signal von dem Detektor 18. Der Synchrondetektor 20 ist vorzugsweise einer der sich im Handel befindlichen, wie z. B. die EG & G Synchrondetektor-Modelle 5206 oder 5208. Der Synchrondetektor 20 enthält einen Verstärker 21, der als variabler Vorverstärker ausgebildet ist, dessen Verstärkung durch an ihn angelegte Steuersignale geregelt wird. Der Synchrondetektor 20 erzeugt eine Spannung, die der Amplitude des Detektorsignals entspricht.

Das verstärkte Detektorsignal wird über einen Analog/Digital-Wandler 24 und eine Eingangs-Ausgangs-Vielfachleitung 26 einer Datenaufnahme oder Abtaststeuereinheit 22 zugeführt. Die Abtaststeuereinheit 22 bewirkt, daß die Abtastvorrichtung 10 das Meßobjekt 12 abtastet, indem die X- und Y-Spiegelantriebsmotoren 14 und 16 Schritt für Schritt mittels X- und Y-Digital/Analog-Wandler (DAC) 28 und 30 bewegt werden, und liefert Information, die auf einem Bildschirm 32 angezeigt werden. In jeder Stellung während des Abtastvorgangs erhält der Synchrondetektor 20 Daten von dem Detektor 18 und gibt diese an die Abtaststeuereinheit 22 weiter.

Ein Zeitsteuerkreis 34 enthält ein programmierbares Zeitglied, das arbeitet, um den Betrieb der Datenansammlung mittels des Analog/Digital-Wandlers 24 und der Bewegung der X- und Y-Spiegelantriebsmotoren 14, 16 über die X- und Y-Digital/Analog-Wandler zu koordinieren. Die Abtaststeuereinheit 22 ist mit einem Digitalcomputer versehen, der so programmiert ist, daß er eine Datenaufnahmeschleife und eine Abtaststeuerfunktion ausführen kann. Derartige Abtaststeuereinheiten sind enthalten in den SPATE 8000 System von OMETRON Inc. Eine Bedienersteuerung kann über eine Tastatur 36 erfolgen.

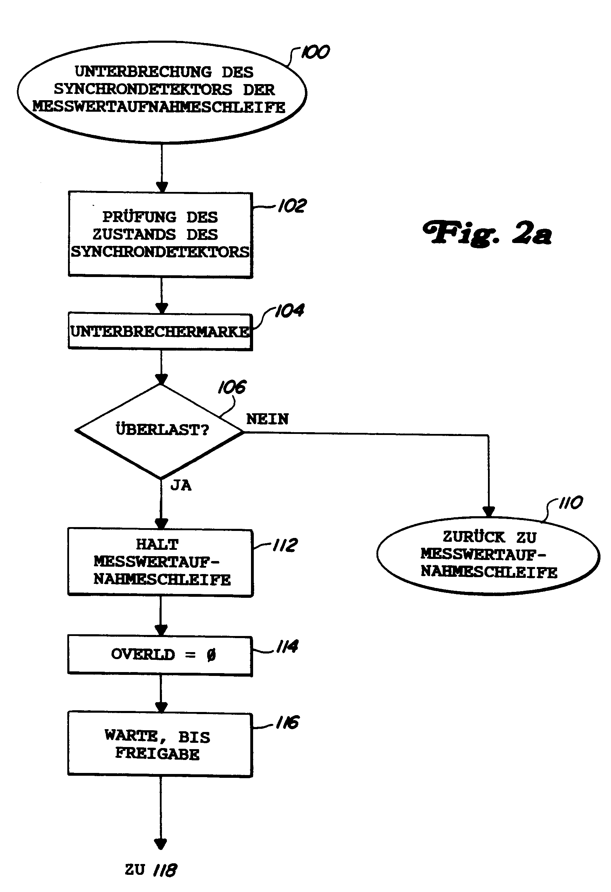

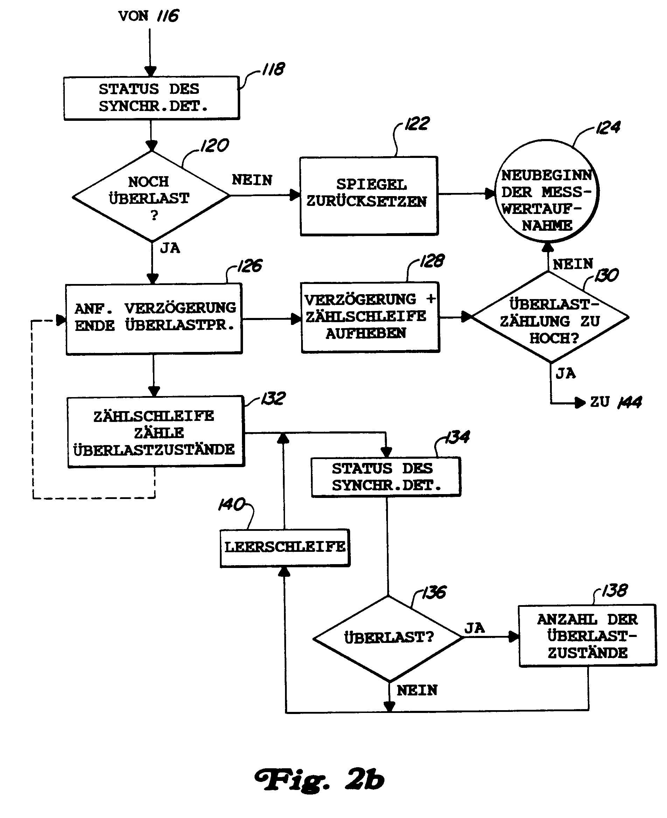

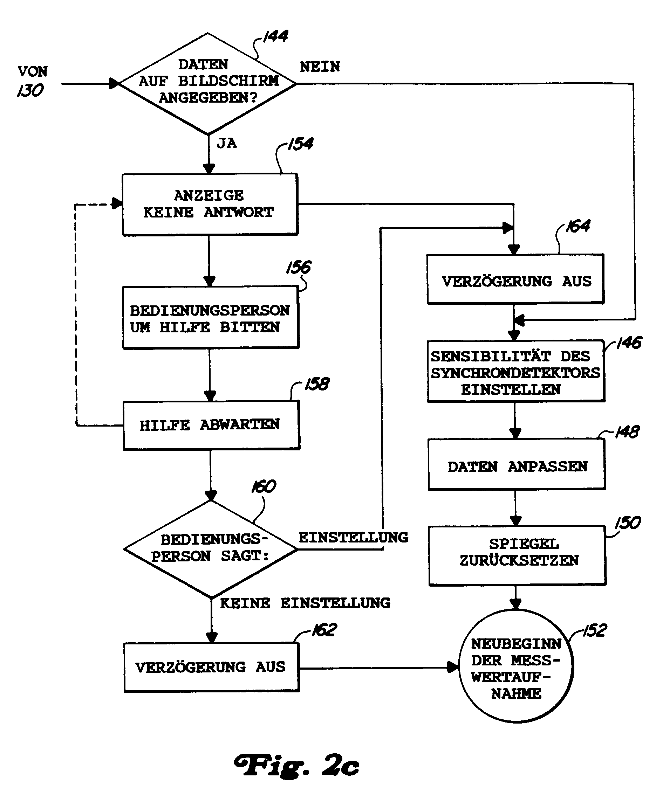

Gemäß der vorliegenden Erfindung ist die Abtaststeuereinheit 22 mit einem zusätzlichen Algorithmus versehen der auf Überlastzustände anspricht und im folgenden in Verbindung mit Figur 2a beschrieben wird. In den Algorithmus wird von der Hauptschleife bzw. der Datenansammelschleife an dem Schritt 100 auf eine Systemunterbrechung hin, die von einem Überlastzustand ausgelöst wird, eingetreten. Daraufhin wird in den Schritten 102 und 104 der Status des Synchrondetektors 20, d. h. die Größe der ihn beaufschlagenden Meßwerte, ermittelt und eine Unterbrechermarke wird auf den Wert -1- gesetzt.

Falls in der Zwischenzeit der Überlastzustand verschwunden ist, bewirkt der Algorithmus, daß mit Schritt 110 fortgesetzt wird, was eine Rückkehr zu der Datenansammelschleife ohne Unterbrechung bedeutet. Wenn aufgrund eines zu großen Wertes des Detektors 18 ein Überlastzustand angezeigt ist, dann wird der Algorithmus von Schritt 106 weitergeleitet zu Schritt 112, der den Vorgang der Datenansammlung in der Datenansammelschleife unterbricht, zu Schritt 114, der einen Zählwert für Überlastung -OVERLD- mit dem Betrag -0- setzt, und zu dem Schritt 116, der bewirkt, daß der Algorithmus für ca. 1 Sekunde unterbrochen wird.

Daraufhin wird in Schritt 118 wieder der Zustand des Synchrondetektors 20 ermittelt. Falls der Überlastzustand zu diesem Zeitpunkt, also bei diesem Schritt, verschwunden ist, wird der Algorithmus von Schritt 120 zu Schritt 122 geführt, was bewirkt, daß die X- und Y-Spiegelantriebsmotoren 14, 16 einige Schritte zurückgesetzt werden. Dann findet in Schritt 124 eine Rückkehr zum und ein Start des Abtastvorgangs und der Datenansammlung statt, so daß neue Daten angesammelt werden, die die Daten ersetzen, in denen der Überlastzustand enthalten ist.

Falls in Schritt 120 der Überlastzustand noch weiter anhält, fährt der Algorithmus mit den Schritten 126 - 140 fort. Diese Gruppe von Schritten wirkt derart, daß sie die Anzahl der Überlastsituationen während einer bestimmten Zeitspanne, etwa 5 - 10 Sekunden, zählt. Während dieser Zeitspanne wird der Überlastzustand periodisch untersucht, etwa alle 0,1 Sekunden, und ein Überlastzählwert -OVERLD- wächst mit jedem auftretendem Überlastzustand an. Nachdem die Zahl der Überlastzustände während dieser Zeitspanne gezählt worden ist, führt Schritt 126 den Algorithmus zu Schritt 128, der die Verzögerung und die mit ihm verbundene Schleife zum Zählen der Überlastzustände abstellt. Falls wenlger als eine bestimmte Anzahl von Überlastzuständen (z. B. weniger als 30) aufgetreten ist, dann wird in Schritt 130 der Algorithmus über Schritt 124 zurück zu der Datenansammelschleife geführt.

In dem Fall, daß mehr als z. B. 30 Überlastzustände registriert worden sind, fährt der Algorithmus mit Schritt 144 fort, der bestimmt, ob an dem Bildschirm Informationen zu den angesammelten Daten dargestellt werden. Anderenfalls fährt der Algorithmus mit den Schritten 146 - 150 fort, die bewirken, daß eine automatische Einstellung der Sensibilität des Synchrondetektors 20 um eine Stufe erfolgt. Im Anschluß daran findet stets eine entsprechende Einstellung des Angleichsfaktors statt, der sich auf die angesammelten Daten bezieht, damit die X- und Y-Spiegelantriebsmotoren 14, 16 die Spiegel in der Abtastvorrichtung 10 verstellen. Dadurch wird der Abtastvorgang für einen kleinen, gerade abgeschlossenen Bereich nochmals durchgeführt, so daß die Daten, die den Überlastzustand enthalten, durch neue Daten ersetzt werden können. Schließlich erfolgt in Schritt 152 eine Rückkehr zu und ein Start der Datenansammelschleife.

Es wird wieder eingesetzt bei Schritt 144. Falls die Daten auf dem Bildschirm 32 angezeigt werden, fährt der Algorithmus mit den Schritten 154 - 158 weiter, die eine Verzögerung von beispielsweise 2 Minuten bewirken, während der Computer auf eine Bedienungsperson wartet, die eine Eingabe über die Tastatur 34 macht. Falls keine Eingabe von einer Bedienungsperson erfolgt und 2 Minuten vergangen sind, fährt der Algorithmus mit Schritt 164, der die Wartezeit beendet, und dann mit den zuvor beschriebenen Schritten 146 - 152 fort. Wird hingegen eine Eingabe von einer Bedienungsperson gemacht, wird der Algorithmus von dem Schritt 160 den zuvor beschriebenen Schritten 164 und 146 - 152 geführt, wenn die Bedienungsperson bestimmt hat, daß die Sensibilität des Synchrondetektors 20 geändert wird. Gibt die Bedienungsperson an, daß eine Einstellung nicht stattfindet, dann führt der Algorithmus von Schritt 160 zu Schritt 162, in dem das Verzögerungszeitglied ausgeschaltet wird, und von diesem über Schritt 152 zurück zu dem Datenansammelkreis.

Im folgenden ist ein Programmablauf eines in der Programmiersprache BASIC geschriebenen Computerprogramms wiedergegeben, das so funktioniert, wie es soeben in Verbindung mit den Figuren 2a - 2 c beschrieben worden ist.

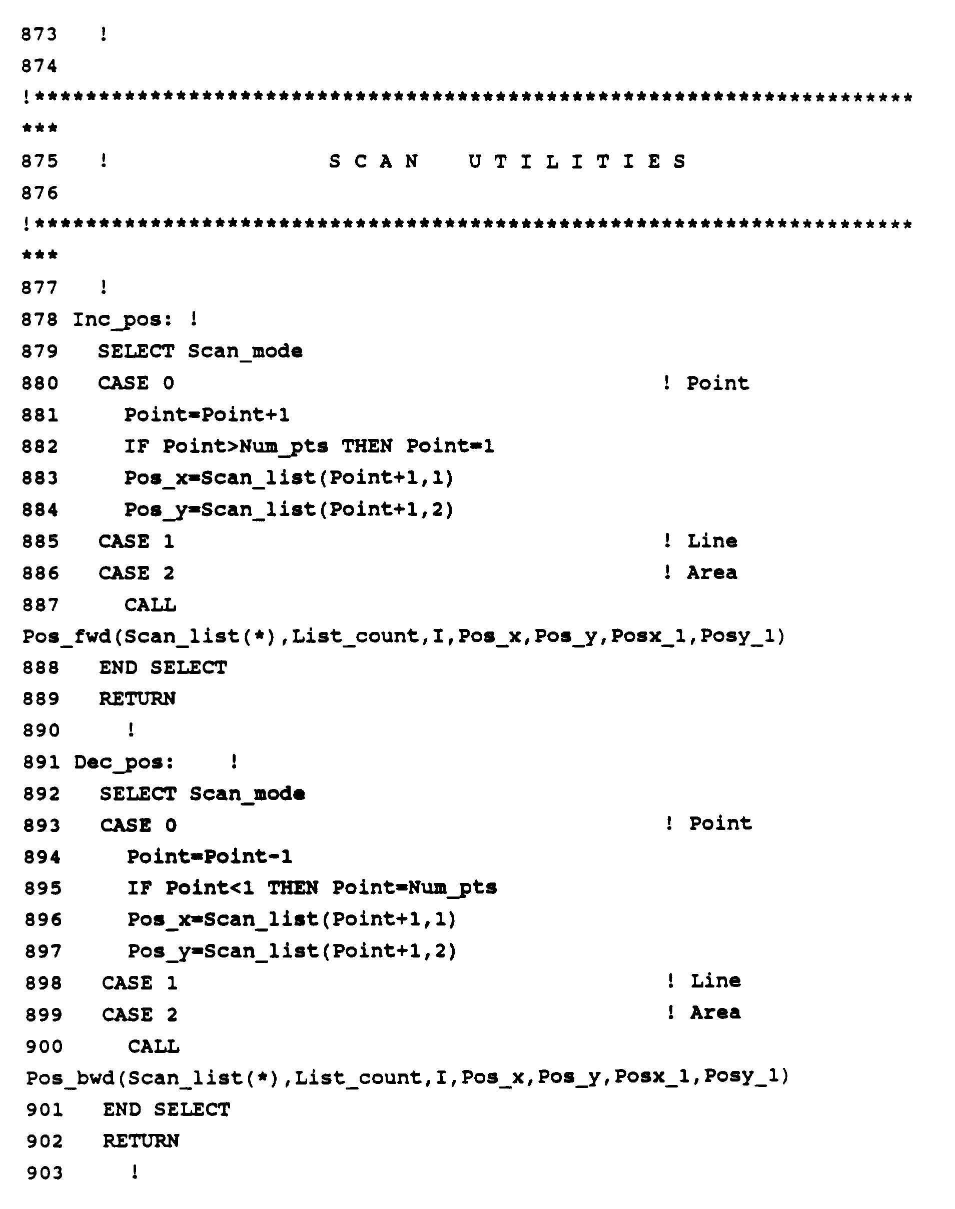

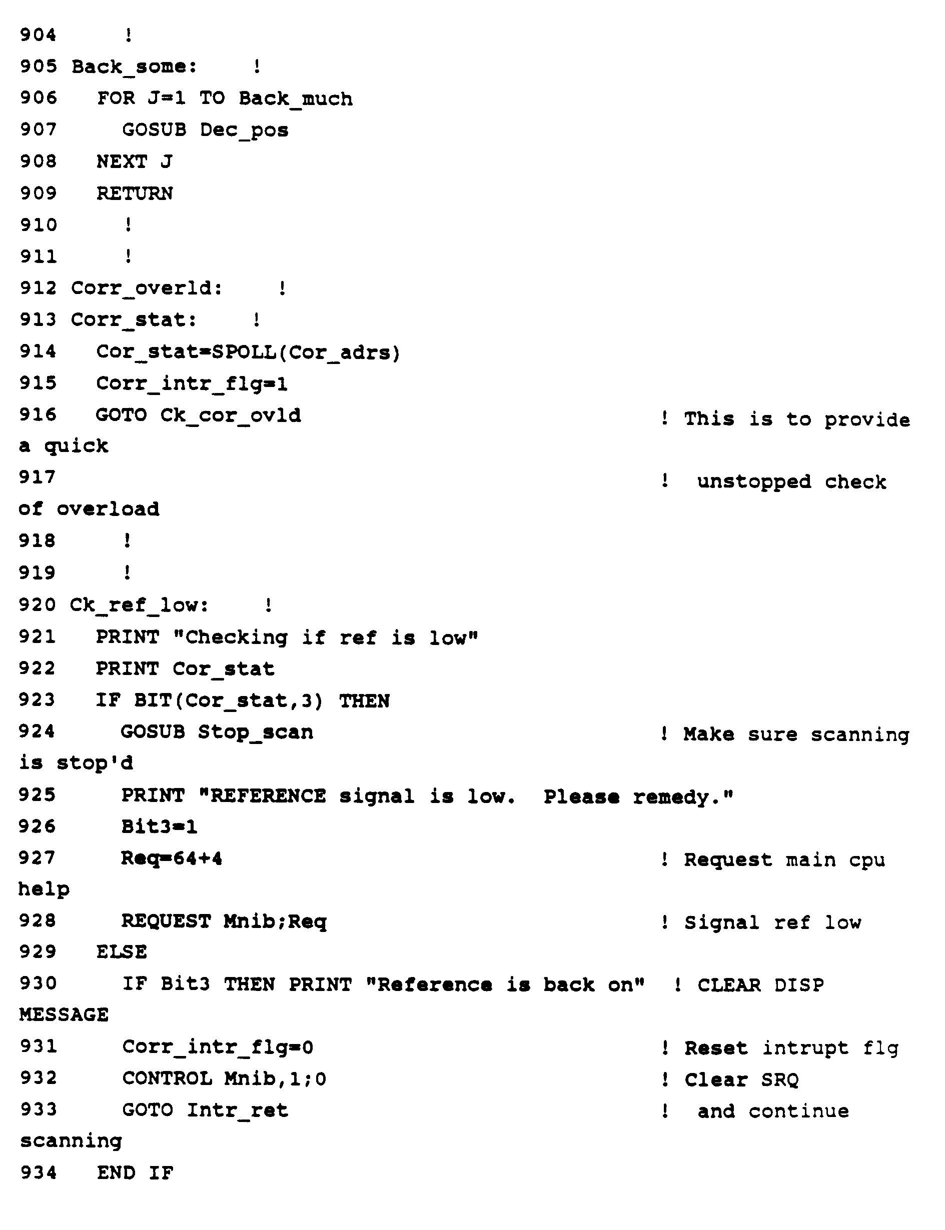

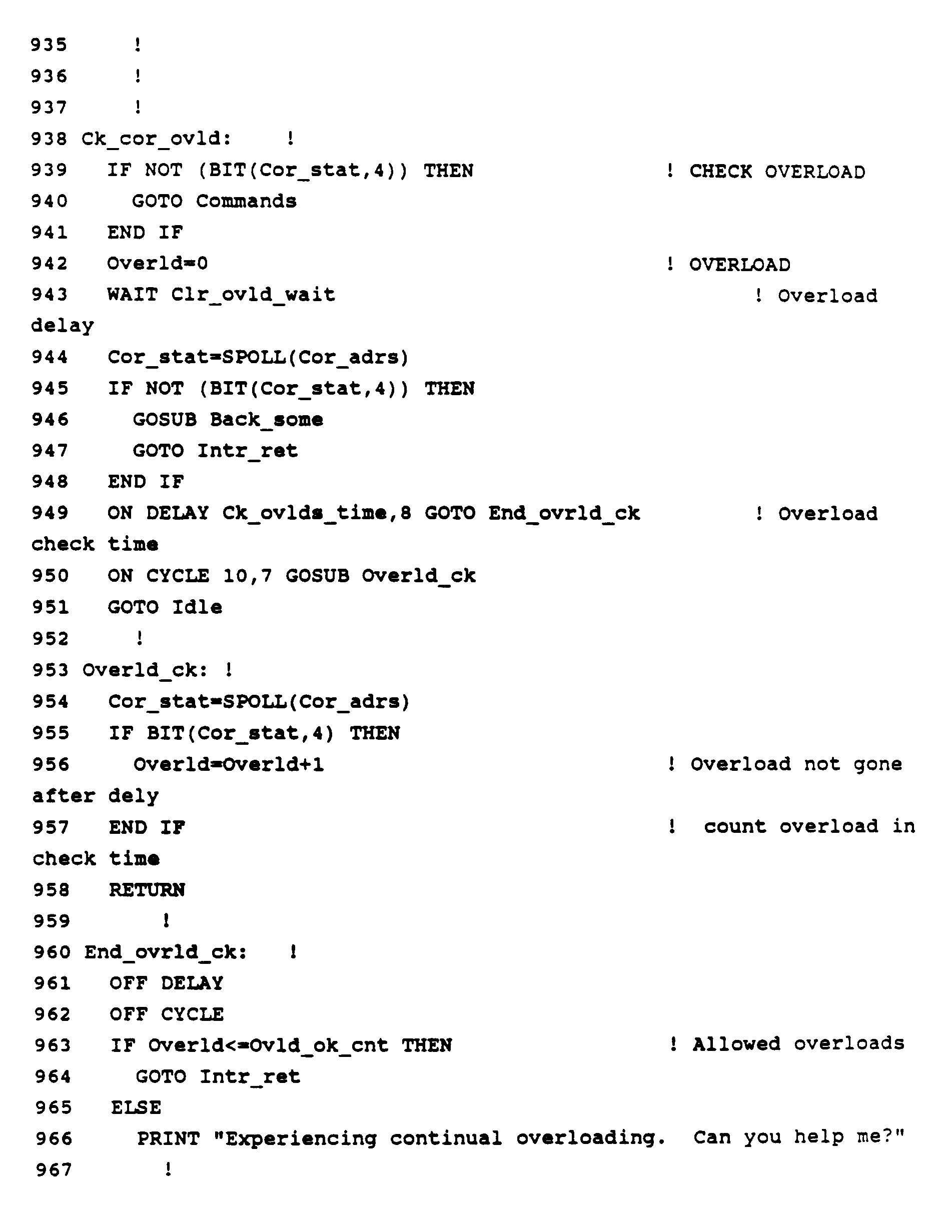

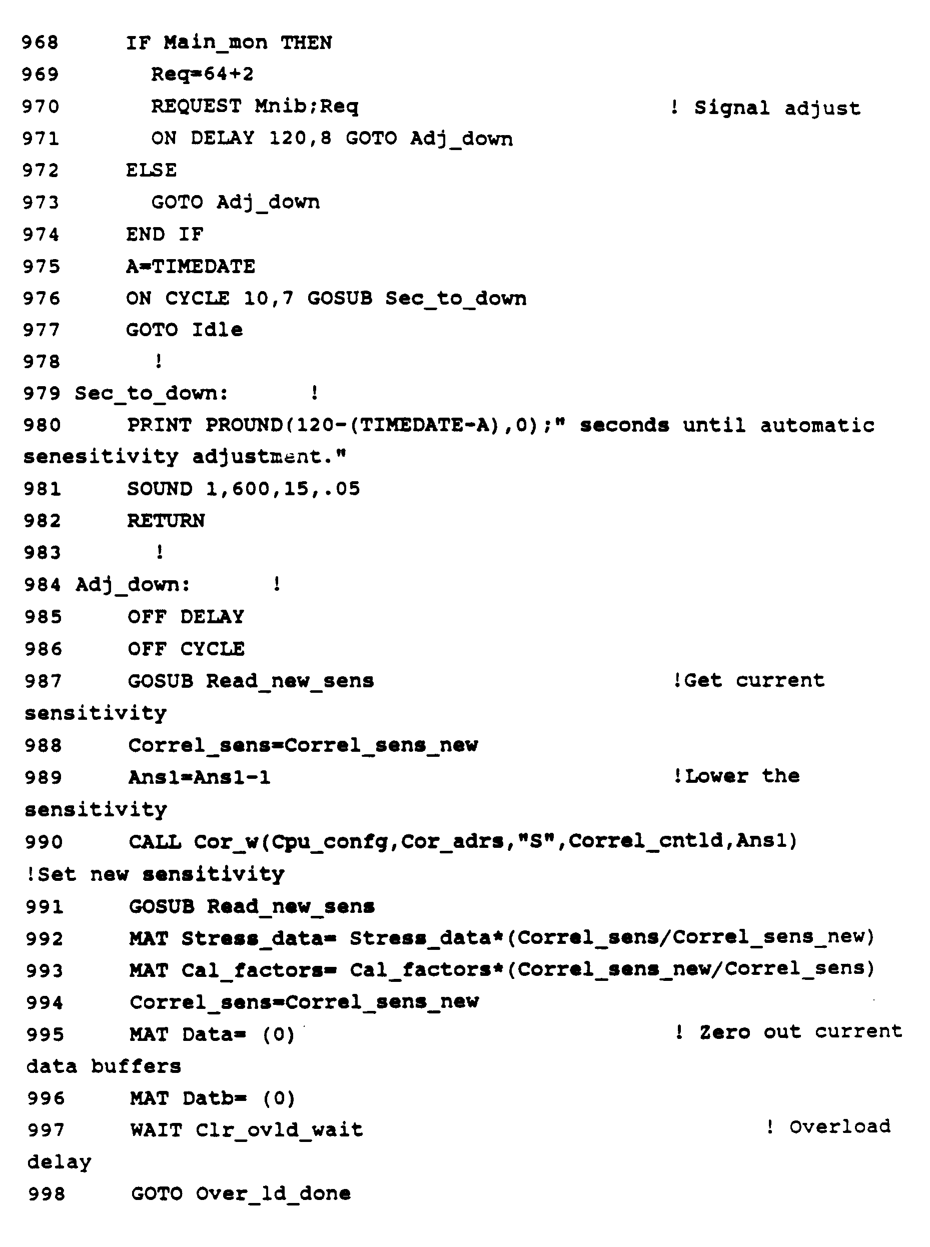

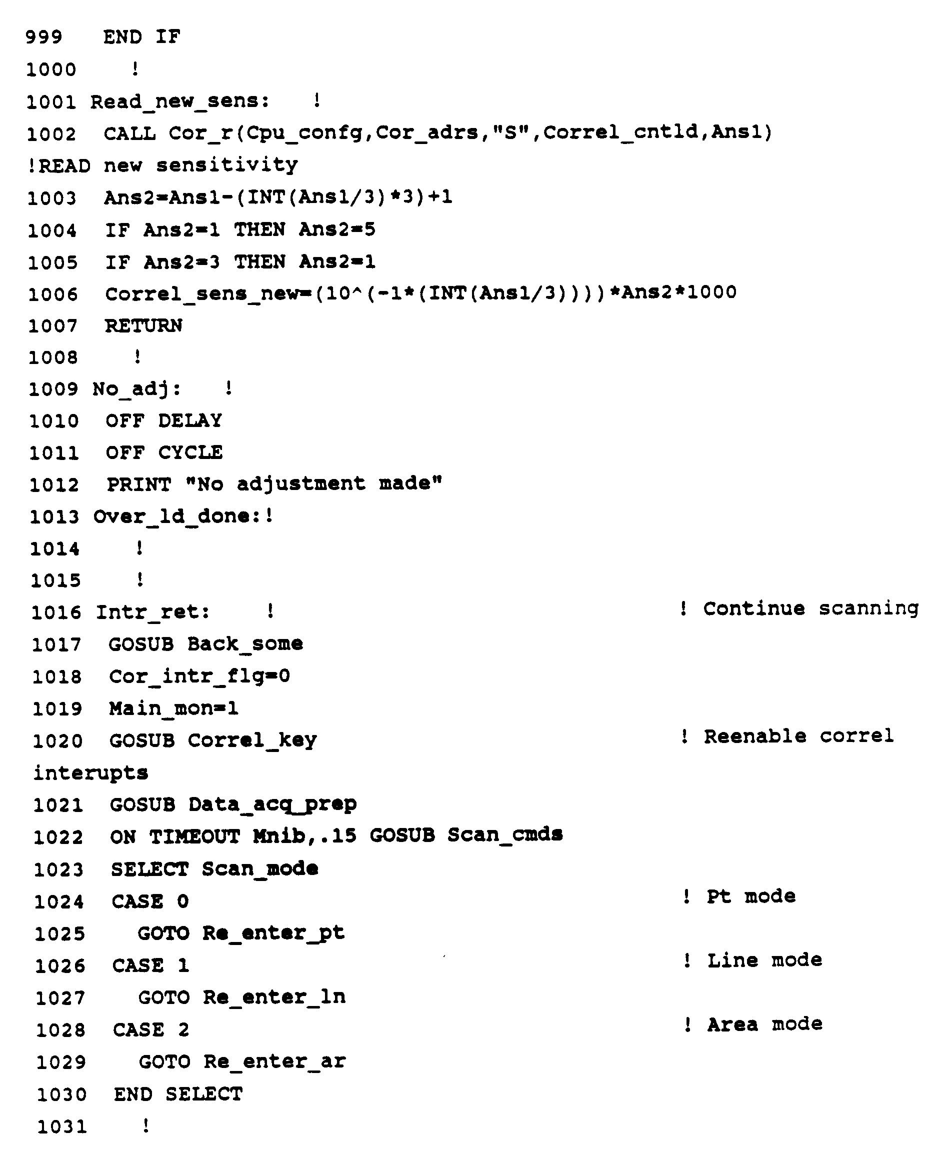

## Patentansprüche

1. Vorrichtung zur Analyse der Belastung eines Meßobjekts (12), mit einem Detektor (18), insbesondere einem Infrarotdetektor, zur Erfassung einer von der Belastung herrührenden Abstrahlung und zur Bildung von Signalen entsprechender Größe, einer Abtastvorrichtung (10) zur Abtastung durch den Detektor 18 entlang des Meßobjekts (12) in Abhängigkeit von Abtastsignalen, die an sie angelegt werden, einem Verstärker (21) zum Verstärken der von dem Detektor (18) gebildeten Signale und einer Abtaststeuereinheit (22) zum Sammeln der verstärkten Signale des Verstärkers (21) und zum Erzeugen der Abtaststeuersignale, dadurch gekennzeichnet, daß die Abtaststeuereinheit (22) Mittel zur Erfassung eines Überlastzustandes enthält und Mittel zur automatischen Rückführung der Abtastvorrichtung (10) und zur erneuten Meßwertaufnahme von dem Meßobjekt (12), wenn der Überlastzustand innerhalb einer bestimmten Zeitspanne verschwindet.

2. Vorrichtung nach Anspruch 1, dadurch gekennzeichnet, daß die Abtaststeuereinheit (22) Rechnermittel enthält, die eine Unterbrechung der Aufnahme von Daten von dem Detektor (18) bewirken, wenn ein Überlastzustand erkannt worden ist und bevor die Wiederholung der Meßwertaufnahme beginnt und eine Annahme der Daten aufnehmen, sobald die Wiederholung der Meßwertaufnahme beginnt.

3. Vorrichtung nach Anspruch 1 oder 2, dadurch gekennzeichnet, daß die Abtaststeuereinheit (22) Rechnermittel zur automatischen Einstellung der Verstärkung des Verstärkers (21) als Folge eines Überlastzustandes enthält.

4. Vorrichtung nach einem der vorherigen Ansprüche, dadurch gekennzeichnet, daß die Abtaststeuereinheit (22) Rechnermittel zur automatischen Einstellung eines Angleichsfaktors enthält, der die vor dem Auftreten eines Überlastzustandes ermittelten Meßwerte ins Verhältnis setzt zu den nach dem Auftreten des Überlastzustandes.

5. Vorrichtung nach einem der vorherigen Ansprüche, dadurch gekennzeichnet, daß die Abtaststeuereinheit (22) Rechnermittel zur Erfassung der Anzahl in einer bestimmten Zeitspanne erfaßten Überlastzustände enthält.

6. Vorrichtung nach einem der vorherigen Ansprüche, mit einem Bildschirm (32) zur Anzeige der Meßwerte, dadurch gekennzeichnet, daß die Abtaststeuereinheit (22) Rechnermittel zur Unterbrechung der automatischen Verstärkungsänderung enthält, und zwar für einen bestimmten Zeitintervall, in dem die aufgenommenen Daten auf dem Bildschirm (32) angezeigt werden.

## Claims

1. A device for measuring the stress of a test object (12), with a detector (18), especially an infrared detector, for detecting radiation arising from the stress and for forming signals of corresponding magnitude,
a scanning device (10) for scanning along the test object (12) with the detector (18) in dependence on scanning signals which are applied thereto, an amplifier (21) for amplifying the signals formed by the detector (18) and a scanning control unit (22) for collecting the amplified signals from the amplifier (21) and for generating the scanning control signals, characterized in that the scanning control unit (22) includes means for detecting an overload state and means for automatic return of the scanning device (10) and for renewed reception of measured values from the test object (12), when the overload state disappears within a predetermined interval of time.

2. A device according to claim 1, characterized in that the scanning control unit (22) includes computer means which effect an interruption in the reception of data from the detector (18) when an overload state is detected and before the repetition of the reception of measured values begins and which allow reception of the data as soon as the repetition of the reception of measured values begins.

3. A device according to claim 1 or 2, characterized in that the scanning control unit (22) includes computer means for automatic adjustment of the gain of the amplifier (21) as a result of an overload state.

4. A device according to any of the preceding claims, characterized in that the scanning control unit (22) includes computer means for automatic adjustment of a compensating factor, which affects the measured values detected before the overload state in relation to those after the appearance of the overload state.

5. A device according to any of the preceding claims, characterized in that the scanning control unit (22) includes computer means for detecting the number of overload states detected in a predetermined interval of time.

6. A device according to any of the preceding claims, with a screen (32) for displaying the measured values, characterized in that the scanning control unit (22) includes computer means for interrupting the automatic alteration in the gain, namely for a predetermined interval of time in which the received data are displayed on the screen (32).

## Revendications

1. Dispositif pour analyser la contrainte subie par un objet de mesure (12), comprenant un détecteur (18), notamment un détecteur infrarouge, pour détecter un rayonnement dû à la contrainte et former des signaux de valeur correspondante, un dispositif de balayage (10) pour faire effectuer un balayage par le détecteur (18) le long de l'objet de mesure (12), en fonction de signaux de balayage qui sont appliqués à ce dispositif, un amplificateur (21) pour amplifier les signaux formés par le détecteur (18), et une unité de commande de balayage (22) pour collecter les signaux amplifiés par l'amplificateur (21) et produire des signaux de commande de balayage, **caractérisé** en ce que l'unité de commande de balayage (22) comprend des moyens pour détecter un état de surcharge, et des moyens pour rappeler automatiquement le dispositif de balayage (10) et enregistrer à nouveau des valeurs de mesure de l'objet de mesure (12), si l'état de surcharge disparaît au cours d'un intervalle de temps déterminé.

2. Dispositif selon la revendication 1, **caractérisé** en ce que l'unité de commande de balayage (22) comprend des moyens de calcul, qui produisent une interruption de l'enregistrement de données par le détecteur (18) si un état de charge a été décelé et avant de recommencer l'enregistrement de valeurs de mesure, et qui enregistrent une acceptation des données dès que l'enregistrement de valeurs de mesure recommence.

3. Dispositif selon la revendication 1 ou 2, **caractérisé** en ce que l'unité de commande de balayage (12) comprend des moyens de calcul pour régler automatiquement l'amplification de l'amplificateur (12) consécutivement à un état de surcharge.

4. Dispositif selon l'une quelconque des revendications précédentes, **caractérisé** en ce que l'unité de commande de balayage (22) comprend des moyens de calcul pour régler automatiquement un facteur de compensation, qui met en rapport les valeurs de mesure déterminées avant l'apparition d'un état de surcharge avec celles déterminées après l'apparition de l'état de surcharge.

5. Dispositif selon l'une quelconque des revendications précédentes, **caractérisé** en ce que l'unité de commande balayage (22) comprend des moyens de calcul pour enregistrer le nombre d'états de surcharge détectés au cours d'un intervalle de temps déterminé.

6. Dispositif selon l'une quelconque des revendications précédentes, comprenant un écran (32) pour afficher les valeurs de mesure, **caractérisé** en ce que l'unité de commande balayage (22) comprend des moyens de calcul pour interrompre la modification automatique de l'amplification, et ce pour un intervalle de temps déterminé pendant lequel les données enregistrées sont affichées sur l'écran (32).
